# EUROPEAN PATENT SPECIFICATION

(11) **EP 2 555 468 B1**
(45) Date of publication and mention of the grant of the patent: **21.10.2015**
(21) Application number: 11762010.4
(22) Date of filing: 31.03.2011
(51) Int. Cl.: H04L 12/28, H04L 29/06, H04L 12/801

(54) **DEVICE CONTROL METHOD, NETWORK DEVICE AND NETWORK SYSTEM**
VERFAHREN ZUR STEUERUNG EINER VORRICHTUNG, NETZWERKVORRICHTUNG UND NETZWERKSYSTEM
PROCÉDÉ DE CONTRÔLE DE DISPOSITIF, DISPOSITIF DE RÉSEAU ET SYSTÈME DE RÉSEAU

(30) Priority: 31.03.2010 CN 201010137702
(43) Date of publication of application: 06.02.2013
(60) Divisional application: 15172848.2
(73) Proprietor: Huawei Device Co., Ltd., Shenzhen, Guangdong 518129 (CN)
(72) Inventor: WU, Huangwei, Shenzhen Guangdong 518129 (CN); ZHU, Yu, Shenzhen Guangdong 518129 (CN); FANG, Ping, Shenzhen Guangdong 518129 (CN); ZHANG, Qinliang, Shenzhen Guangdong 518129 (CN)
(74) Representative: Lord, Michael
(86) International application number: PCT/CN2011/072323
(87) International publication number: WO 2011/120436

(56) References cited:
- EP-A1- 1 445 972
- EP-A1- 1 777 883
- WO-A1-2005/046166
- WO-A1-2007/086652
- WO-A1-2009/128163
- CN-A- 1 428 709
- CN-A- 1 953 410
- US-A1- 2004 150 530

## Description

### FIELD OF THE INVENTION

The present invention relates to network device interworking and control technologies, and in particular, to a device control method, a network device, and a network system.

### BACKGROUND OF THE INVENTION

Currently, with development of digital homes and digitization of consumer electronic products, more and more digital entertainment devices and electrical appliances appear in homes. A digital home network concept that is proposed in the art and is tried to be implemented is to connect these devices and products into a home network in a wired or wireless manner to implement such functions as content sharing or mutual control.

To implement interworking and control between various different home devices, more and more home network devices support a UPnP (Universal Plug and Play, universal plug and play) function. In a UPnP system, a user controls home devices through a control device in a home network, where the control device is generally called a CP (Control Point, control point). The CP, by using a UPnP protocol and invoking a related control command of a UPnP device, reads state information of the UPnP device in the home network, and controls the UPnP device to execute a corresponding operation. An existing UPnP protocol allows multiple CPs to simultaneously control a controlled device.

EP1777883A1 discloses a method and apparatus exclusively control a device in a home network. A control point requests exclusive control authority form the device. In response to the request the control point receives an identifier (RID) used to successfully authenticate the exclusive control authority. The control point then acquires the exclusive control authority and controls the device. Thus other control points are prevented from interfering with the device so as not perform an operation.

EP1445972A1 relates to a remote control system includes a plurality of control object terminals, a control sever to control the control object terminals and a remote control terminal. The remote control terminal issues a control request for a specific terminal of the plurality of control object terminals to the control sever. The control server identifies the remote control terminal uniquely in response to the control request and carries out the control request in place of the remote control terminal when the remote control right of the specific terminal is allocated to the remote control terminal.

WO2009/128163A1 provides a car AV system. When receiving the exclusive control right setting request from the car navigation apparatus 13, the exclusive control managing unit 206 determines whether or not to accept the exclusive control right setting request and set the exclusive control right to the amplifier 17. When accepting the exclusive control right setting request, the exclusive control managing unit 206 sets the exclusive control right to exclude the intervention by other apparatus to the amplifier 17, and transmits the exclusive control right setting response to the car navigation apparatus 13.

WO2007/086652A1 relates to a service provided by a universal plug and play (UPnP) device. A control point (CP) calls an action that reserves a specific command to be performed at a specific time and a device receives the call of the action so that the specific command can be performed at the specific time, thereby reserving functions of the UPnP device.

During the implementation of embodiments of the present invention, the inventor finds that the prior art has at least the following problems:
1. The existing UPnP protocol allows multiple CPs to simultaneously control a controlled device. Therefore, when a user operates a certain device, another CP may perform such an interference operation as restart on the device, thereby causing an operation failure of the user.
2. Ordinary access to a device affects efficiency of a major operation on the device.

### SUMMARY OF THE INVENTION

Embodiments of the present invention provide a device control method, a network device, and a network system, so as to avoid interference with a major operation on a controlled device when multiple control devices simultaneously access the controlled device.

For the above purpose, the embodiments of the present invention provide the technical solutions according to the independent claims.

With the device control method, the network device, and the network system provided in the embodiments of the present invention, in an environment where multiple control devices may control a controlled device, the controlled device enters an exclusive mode according to an exclusive control request from a control device, that is, the controlled device determines which control device may temporarily monopolize the controlled device; within valid time of the exclusive mode, the controlled device normally executes an access request of an exclusive control device, but determines, according to an exclusive condition, whether to execute an access request from another control device, or directly reject or discard the access request from the another control device. In this way, reliability and efficiency of a continuous operation and a major operation that are performed by the exclusive control device on the controlled device are ensured, thereby avoiding possible interference with the major operation on the controlled device when multiple control devices perform control simultaneously.

### BRIEF DESCRIPTION OF THE DRAWINGS

FIG. 1 is a flowchart of a device control method according to an embodiment of the present invention;
FIG. 2 is a flowchart of message interaction between a control device and a controlled device in a device control method according to an embodiment of the present invention;
FIG. 3 is a schematic structural diagram of a network device according to an embodiment of the present invention;
FIG 4 is another schematic structural diagram of a network device according to an embodiment of the present invention; and
FIG 5 is another schematic structural diagram of a network device according to an embodiment of the present invention.

### DETAILED DESCRIPTION OF THE EMBODIMENTS

In order to make persons skilled in the art understand the solutions of the embodiments of the present invention more clearly, the embodiments of the present invention are described in further detail in the following with reference to the accompanying drawings and implementation manners.

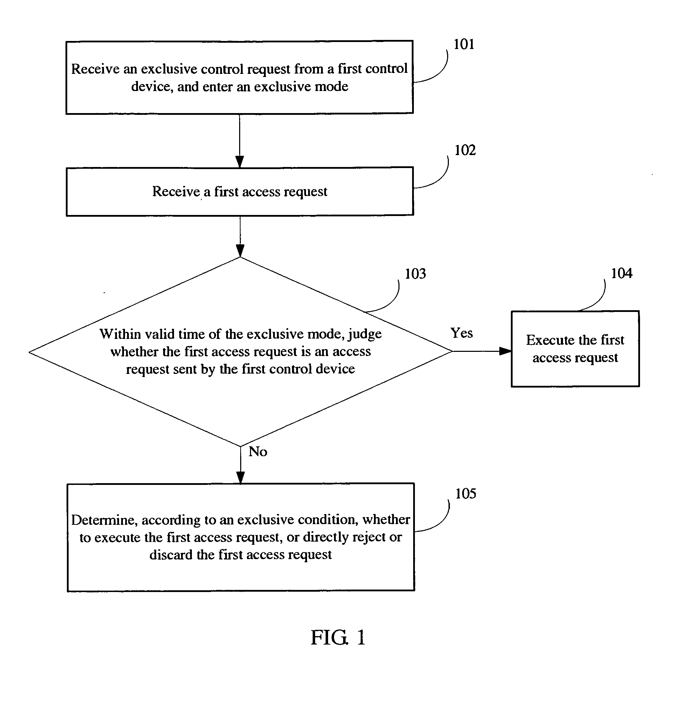

FIG. 1 is a flowchart of a device control method according to an embodiment of the present invention. The method includes the following steps:
Step 101: Receive an exclusive control request from a first control device, and enter an exclusive mode.

For example, before performing a continuous and/or key operation on a controlled device, the first control device may send an exclusive control request to the controlled device, so as to enable the controlled device to enter an exclusive mode.

After receiving the exclusive control request from the first control device, the controlled device enters the exclusive mode. Preferably, the controlled device may return a response message that corresponds to the exclusive control request to the first control device, so as to inform the first control device that the exclusive mode has already been enabled.

If multiple control devices send an exclusive control request to the controlled device, the controlled device may enter, by using a first-come-first-served policy, an exclusive mode that corresponds to a corresponding control device.

Step 102: Receive a first access request.

Step 103: Within valid time of the exclusive mode, judge whether the first access request is an access request sent by the first control device; if yes, execute step 104; and otherwise, execute step 105.

Specifically, after the exclusive control request from the first control device is received, its corresponding first control device may be determined according to address information of the request. In this case, information such as its device ID, IP address, MAC address, certificate, and certificate hash value may be recorded. Whether the first access request is an access request sent by the first control device may be determined according to recorded device information.

Step 104: Execute the first access request.

Step 105: Determine, according to an exclusive condition, whether to execute the first access request, or directly reject or discard the first access request.

That is, if the exclusive mode is directed to the first control device, within the valid time of the exclusive mode, the first control device as a monopolist has an access right to access the controlled device. However, for an access request from another control device, there are multiple different processing manners according to the exclusive condition.

In this embodiment of the present invention, the exclusive condition may be a preset exclusive condition that corresponds to the first control device. For example, only an exclusive control request initiator is allowed to access the controlled device within a certain period of time (for example, 60s) and/or within the certain number of times of invoking a command (for example, five times). That is, for exclusive control requests initiated by different control devices, exclusive conditions for starting the exclusive mode may be the same.

In addition, to further facilitate a flexible application of a user, when sending an exclusive control request, a control device may further carry exclusion condition information in the exclusive control request. After receiving the exclusive control request, a controlled device may set, according to the exclusion condition information in the exclusive control request, an exclusive condition that corresponds to the exclusive mode. Or, the control device may firstly set an exclusive condition through one or multiple exclusive control commands, and then send to the controlled device an exclusive control command that is used to start the exclusive mode and instruct the controlled device to start and apply an exclusive mode that corresponds to the preset exclusive condition. In this way, different exclusive conditions may be set for different control devices, so that differentiated services may be provided for different control devices.

In this embodiment of the present invention, the controlled device may determine, according to multiple different manners, whether the exclusive mode is within the valid time. For example:
(1) The valid time of the exclusive mode is determined according to a preset relationship between the first control device and exclusive valid time; or
   exclusive time information is carried in the control request, and the valid time is determined according to the exclusive time information.
(2) The number of continuous exclusive access requests of the first control device is determined according to a preset relationship between the first control device and information of the number of continuous access requests; and if the recorded number of access requests of the first control device in the exclusive mode is smaller than the number of continuous exclusive access requests, the exclusive mode is within the valid time; or
   threshold information of the number of requests is carried in the control request, and a threshold of the number of exclusive access requests of the first control device is determined according to the threshold information of the number of requests; and if the recorded number of access requests of the first control device in the exclusive mode is smaller than the threshold of the number of exclusive access requests, the exclusive mode is within the valid time.
(3) First time is determined according to a preset relationship between the first control device and exclusive valid time, and the number of continuous exclusive access requests of the first control device is determined according to a preset relationship between the first control device and information of the number of continuous access requests; and if current time is within the first time and the recorded number of access requests of the first control device in the exclusive mode is smaller than the number of continuous exclusive access requests, the exclusive mode is within the valid time; or
   exclusive time information and threshold information of the number of requests are carried in the control request, and second time is determined according to the exclusive time information; a threshold of the number of exclusive access requests of the first control device is determined according to the threshold information of the number of requests; and if current time is within the second time and the recorded number of access requests of the first control device in the exclusive mode is smaller than the threshold of the number of exclusive access requests, the exclusive mode is within the valid time.

It should be noted that in this embodiment of the present invention, after exclusive valid time expires, a corresponding exclusive mode may be invalid automatically. In addition, the exclusive mode may also be cancelled in advance by an exclusive control device or another control device. In this case, the method in this embodiment of the present invention may further include the following steps:
receiving an exclusive mode cancellation request; and if the exclusive mode cancellation request is a request sent by the first control device or a request sent by a control device whose level is higher than a level of the first control device, canceling the exclusive mode.

In addition, the exclusive mode may also be invalid automatically after the controlled device is restarted.

In this embodiment of the present invention, the method may further include the following steps: within the valid time of the exclusive mode, if the first access request is an access request sent by the first control device, updating a valid period of the exclusive mode (for example, an original valid period is set to 60s, and the exclusive control device may update the valid period to 80s through an exclusive control command; and in this case, the controlled device restarts timing); or in the exclusive valid time, any other access request sent by the control device may cause that the exclusive condition is updated automatically (for example, an original valid period is set to 60s, and another access request sent by the exclusive control device causes the controlled device to restart timing from 60s). In this way, an operation performed by the exclusive control device on the controlled device may be fully ensured.

Definitely, this embodiment of the present invention is not limited to these foregoing manners, and other manners may also be used to cancel the exclusive mode or update an exclusive valid period.

After the exclusive mode is invalid or is canceled, the controlled device may accept access requests of all control devices.

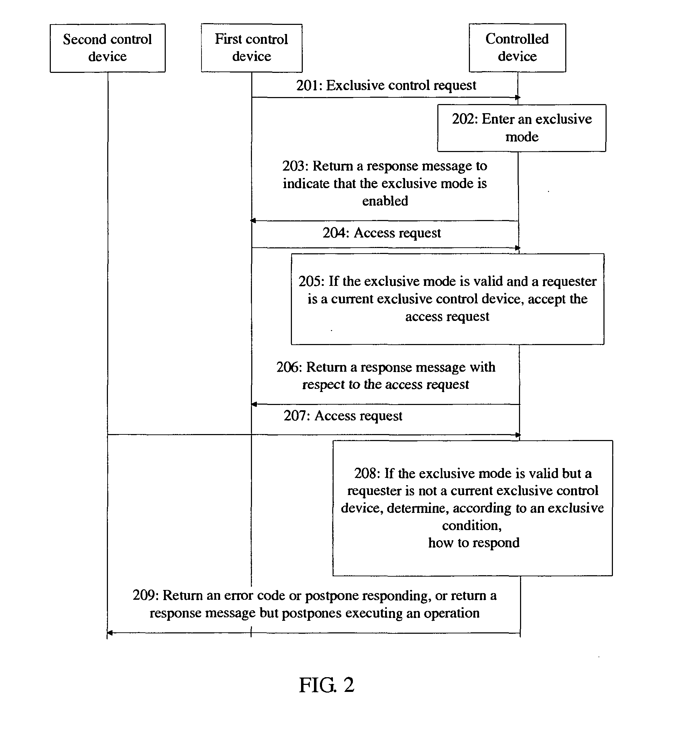

FIG 2 is a flowchart of message interaction between a control device and a controlled device in a device control method according to an embodiment of the present invention.

201: A first control device sends an exclusive control request to a controlled device.

202: After receiving the exclusive control request, the controlled device enters an exclusive mode.

203: The controlled device returns a response message to the first control device to indicate that the exclusive mode is enabled.

204: The first control device sends an access request to the controlled device.

205: After receiving the access request, if the controlled device determines that the exclusive mode is valid and a requester is a current exclusive control device, the controlled device accepts the access request.

206: The controlled device returns to the first control device a response message with respect to the access request.

207: A second control device sends an access request to the controlled device.

208: After receiving the access request, the controlled device determines that a requester is the second control device and determines, according to an exclusive condition, how to respond.

209: The controlled device returns an error code to reject the access request or postpone responding, or returns a response message but postpones executing an operation. Definitely, the controlled device may also discard the access request directly.

It can be seen that, with the device control method in this embodiment of the present invention, a controlled device determines, according to an exclusive control request from a control device, which control device may temporarily monopolize the controlled device; within valid time of an exclusive mode, the controlled device normally executes an access request of an exclusive control device, but determines, according to an exclusive condition, whether to execute an access request from another control device, or directly reject or discard the access request from the another control device. In this way, reliability and efficiency of a continuous operation and a major operation that are performed by the exclusive control device on the controlled device are guaranteed, thereby avoiding possible interference with the major operation on the controlled device when multiple control devices perform control simultaneously.

To further enhance flexibility of an application, in this embodiment of the present invention, an access level may be set for each control device, and a control policy corresponding to each access level is set. These operations may be completed by a control center in a network or by any one control device or the controlled device, which is not limited in this embodiment of the present invention, but such information needs to be obtained by the controlled device.

In this way, before the controlled device starts an exclusive mode, that is, before step 202, the controlled device determines whether an access level of the first control device has an exclusive right; if yes, the controlled device enters the exclusive mode; and otherwise, the controlled device may not start the exclusive mode, that is, forbids the first control device to monopolize the controlled device. In addition, within the valid time of the exclusive mode, the controlled device may also cancel the exclusive mode according to a control policy that corresponds to each access level.

In addition, in this embodiment of the present invention, exclusion condition information may include exclusive access interface information, where exclusive access interfaces refer to some access interfaces affected by the exclusive mode on the controlled device. When the exclusive mode is started, for example, such access interfaces as a rebooting interface generally interrupt a continuous operation performed on the controlled device. Therefore, a non-exclusive device is forbidden to access this type of interfaces after the controlled device enters the exclusive mode; and in another example, such as interfaces for obtaining device information/status generally do not affect the controlled device in executing an operation command continuously, and thus are not affected by the exclusive mode. That is, even within exclusive valid time, any other control device may also access such interfaces normally.

The exclusive access interface information may be used to indicate an interface that is allowed to be accessed, and may also be used to indicate an interface that is forbidden to be accessed. In this way, before the controlled device executes the first access request, an interface requested to be accessed by the first access request is determined; if the interface requested to be accessed by the first access request is included in the exclusive access interface information, the first access request is executed; and otherwise, the first access request is rejected; or if the interface requested to be accessed by the first access request is included in the exclusive access interface information, the first access request is rejected; and otherwise, the first access request is executed. In this way, security of the controlled device may be better ensured. Definitely, after the exclusive mode is invalid or is cancelled, the controlled device may accept access of another control device. In this case, which interfaces are restricted to being accessed may be determined according to a preset set of accessible interfaces that correspond to control devices.

In another embodiment of the present invention, the exclusion condition information may further include an information set or a specified level of a control device. In this way, the determining, according to the exclusive condition, whether to execute the first access request may be: if the first access request is an access request sent by a second control device and the second control device is included in the information set or a level of the second control device is the specified level, executing the first access request.

In another embodiment of the present invention, the determining, according to the exclusive condition, whether to execute the first access request may be: if the first access request is an access request sent by a second control device and a level of the second control device is higher than a level of the first control device, executing the first access request.

In another embodiment of the present invention, the determining, according to the exclusive condition, whether to execute the first access request may be: rejecting an access request from another control device; or postponing executing the access request from the another control device; or discarding the access request from the another control device.

Definitely, this embodiment of the present invention is not limited to the foregoing manners, and multiple variations may be available according to this idea, which are described in the following by using examples.

It is assumed that an access level is set for each control device, and levels are Public->Basic->Admin in ascending order. Each level corresponds to a set of accessible interfaces. A control device with a Public level is untrustful for the controlled device, and therefore, only an interface that slightly affects the controlled device may be accessed, for example, an interface for obtaining a current status of a device GetStatus(); a control device with a Basic level may access more interfaces, for example, an interface for rebooting a device Reboot(); and a control device with an Admin level may access all interfaces.

Therefore, the following one or multiple policies may be set to protect a device.
(1) An interface for enabling/disabling an exclusive mode can be invoked by only a control device with a Basic/Admin (or only an Admin) level, which means that an untrustful control device with a Public level cannot request the controlled device to start the exclusive mode, thereby preventing the controlled device from being monopolized by an illegal control device.
(2) An exclusive mode that is requested to be started by a control device with a Basic level may be stopped by a control device with an Admin level, or a control device with an Admin level may control a monopolized controlled device normally no matter whether the exclusive mode is enabled.
(3) An exclusive mode that is requested to be started by a control device with an Admin level cannot be stopped by a control device with a Basic level, and can be stopped by only the control device with the Admin level or be cancelled automatically when an exclusive condition is no longer satisfied.

With the device control method in this embodiment of the present invention, reliability and efficiency of a continuous operation and a major operation that are performed by an exclusive control device on a controlled device may be ensured, thereby avoiding possible interference with the major operation on the controlled device when multiple control devices perform control simultaneously; and in addition, security of each interface of the controlled device may be further ensured.

It should be noted that in this embodiment of the present invention, the exclusive control request that is sent by the control device to the controlled device may be implemented in multiple manners, which are described in detail in the following by using examples.

### 1. The exclusive control request is implemented through a control command

For example, an exclusive mode command SetMonopolizationMode() may be set. Parameters of this command are shown in Table 1 in the following.

**Table 1**

| **Argument** | **Direction** | **relatedStateVariable** |
|---|---|---|
| Enable | IN | MonopolizationEnable |
| Mode | IN | MonopolizationMode |
| Policy | IN | MonopolizationPolicy |

Each parameter in Table 1 is defined as follows:
(1) Enable parameter (Boolean): When a value of this parameter is 1, the controlled device is instructed to enable an exclusive mode; and when the value of this parameter is 0, the controlled device is instructed to stop the exclusive mode. This parameter is not mandatory, that is, a control command for stopping the exclusive mode may be defined additionally, for example, StopMonopolization().
(2) Mode parameter (String): This parameter is used to set an exclusive condition. Optional values include Duration (duration), Times (times), and Hybrid (hybrid). Specific examples of these values are as follows:
   Duration=30s, indicating that the controlled device are required to be monopolized within 30 seconds.
   Times=6, indicating that the controlled device are required to be monopolized within six subsequent access requests.
   Hybrid=30s, 6, indicating that exclusive of the controlled device is automatically canceled only when both the duration and the times are satisfied or that exclusive of the controlled device is automatically canceled after one of the duration and the times is satisfied.
(3) Policy parameter (String): This parameter is used to set an exclusive policy and is an optional parameter. Specific examples of values of this parameter are as follows:
   MonopolizedInterfaces=Reboot FactoryReset FirmwareUpgrade, indicating that listed interfaces are forbidden to be accessed by a non-exclusive control device in an exclusive period, and while other interfaces may be normally accessed by an exclusive control device and the non- exclusive control device.

FreeInterfaces=GetStatus GetValues, indicating that listed interfaces may be normally accessed by an exclusive control device and a non-exclusive control device in an exclusive period, and while other interfaces cannot be accessed by a non-exclusive control device.

In addition, a state variable corresponding to the foregoing one or multiple parameters may be set that an event is generated in the case of a change, for example:
When a value of MonopolizationEnable is changed from 0 to 1 due to a control command that is sent by the control device to the controlled device, the controlled device may send a unicast event to a control device that subscribes to an event, where the unicast event carries a latest value of a changed state variable, so that another control device may obtain the message; or the controlled device sends a multicast event to a specified multicast address, where the multicast event carries a latest value of a changed state variable. In this way, any control device may obtain the message by listening in a multicast port, and then decides whether to send a control command to the controlled device.

### 2. The exclusive control request is implemented through a data model

Several nodes and parameters may be defined through a data model of a device, so as to reflect a functional component, information, and a configuration state of the device in a tree structure. For example, the following data model segments reflect the information of the device, including a device name, a software version, and provider information, and so on:
Device/DeviceInfo/
FriendlyName
ProvisioningCode
SoftwareVersion
SoftwareDescription

In this embodiment of the present invention, a corresponding parameter in the data model may be set through a universal interface for setting a data model, so as to request the controlled device to start or cancel an exclusive mode.

For example, a node is defined in the data model of the device, and is used to describe information of the exclusive mode, for example:
Devcie/Monopolization/
Enable
Mode
Policy

For values of Enable, Mode, and Policy parameters, reference may be made to the foregoing description.

The control device may set these parameter values through a universal interface for setting a data model, for example, SetValues(), so as to start or cancel the exclusive mode, and may further set information such as an exclusive condition.

In addition, the control device may further query, through a universal interface for reading a data model, for example, GetValues(), whether a current controlled device is in an exclusive mode.

Definitely, the foregoing descriptions are only examples of specific implementation manners of the exclusive control request that is sent by the control device to the controlled device. The embodiments of the present invention are not limited to the foregoing two manners, and other similar implementation manners may also be available, for example, a combination of the two, that is, the control device sets an exclusive condition by operating a data model of the controlled device, and then instructs, through an exclusive mode, the controlled device to start an exclusive model that uses the foregoing exclusive condition, which are not exemplified one by one.

Persons of ordinary skill in the art may understand that all or a part of the steps in the method according to the foregoing embodiments may be implemented by a program instructing relevant hardware. The program may be stored in a computer readable storage medium, such as a ROM/RAM, a magnetic disk, and an optical disk.

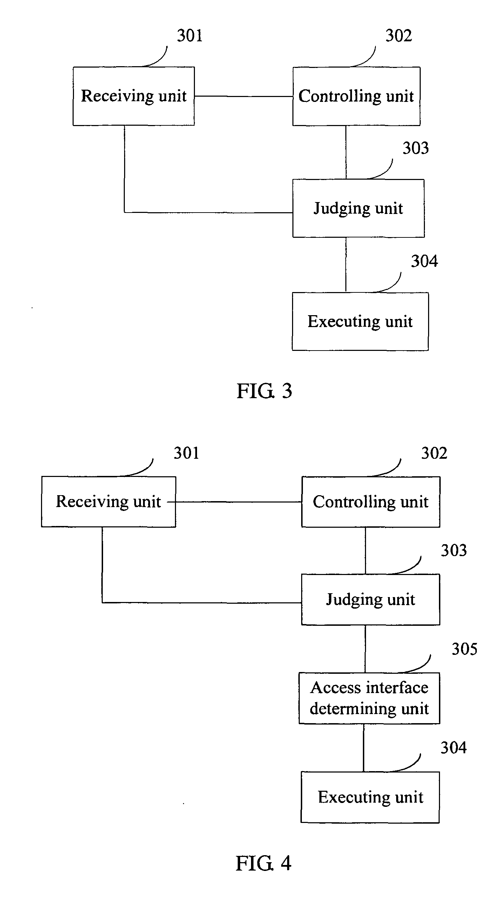

Accordingly, an embodiment of the present invention further provides a network device. FIG. 3 is a schematic structural diagram of the network device.

In this embodiment, the network device includes a receiving unit 301, a controlling unit 302, and a judging unit 303 and an executing unit 304, where:
the receiving unit 301 is configured to receive an exclusive control request and an access request;
the controlling unit 302 is configured to: after the receiving unit 301 receives an exclusive control request from a first control device, control the network device to enter an exclusive mode;
a judging unit 303 is configured to: within valid time of the exclusive mode, after the receiving unit 301 receives a first access request, judge whether the first access request is an access request sent by the first control device; and
an executing unit 304 is configured to: when a judgment result of the judging unit 303 is that the first access request is an access request sent by the first control device, execute the first access request; and otherwise, determine, according to an exclusive condition, whether to execute the first access request, or directly reject or discard the first access request.

In this embodiment of the present invention, the exclusive condition may be a preset exclusive condition that corresponds to the first control device, for example, the exclusive condition is stored in the network device.

In addition, the receiving unit is further configured to receive a request that carries exclusion condition information, for example, the control device may carry exclusion condition information in the exclusive control request, or the control device may also set an exclusive condition through one or multiple exclusive control commands. In this way, different exclusive conditions may be set for different control devices, so that differentiated services may be provided for different control devices. Therefore, the network device may further include: an exclusive condition determining unit (which is not shown in the figure), configured to determine the exclusive condition according to the exclusion condition information.

In this embodiment of the present invention, multiple different manners may be used to determine whether the exclusive mode is within the valid time. For example:
In a network device embodiment of the present invention, the network device further includes a first time determining unit or a second time determining unit, where:
   the first time determining unit is configured to determine the valid time of the exclusive mode according to a preset relationship between the first control device and exclusive valid time; or
   the second time determining unit is configured to determine the valid time according to exclusive time information carried in the control request.
In a network device embodiment of the present invention, the network device further includes a third time determining unit or a fourth time determining unit, where:
   the third time determining unit is configured to: determine the number of continuous exclusive access requests of the first control device according to a preset relationship between the first control device and information of the number of continuous access requests; and if the recorded number of access requests of the first control device in the exclusive mode is smaller than the number of continuous exclusive access requests, determine that the exclusive mode is within the valid time; or
   the fourth time determining unit is configured to: determine a threshold of the number of exclusive access requests of the first control device according to threshold information of the number of requests, where the threshold information of the number of requests is carried in the control request; and if the recorded number of access requests of the first control device in the exclusive mode is smaller than the threshold of the number of exclusive access requests, determine that the exclusive mode is within the valid time.
In a network device embodiment of the present invention, the network device further includes a fifth time determining unit or a sixth time determining unit, where:
   the fifth time determining unit is configured to: determine first time according to a preset relationship between the first control device and exclusive valid time, and determine the number of continuous exclusive access requests of the first control device according to a preset relationship between the first control device and information of the number of continuous access requests; and if current time is within the first time and the recorded number of access requests of the first control device in the exclusive mode is smaller than the number of continuous exclusive access requests, determine that the exclusive mode is within the valid time; or
   the sixth time determining unit is configured to: determine second time according to exclusive time information that is carried in the control request; determine a threshold of the number of exclusive access requests of the first control device according to threshold information of the number of requests, where the threshold information of the number of requests is carried in the control request; and if current time is within the second time and the recorded number of access requests of the first control device in the exclusive mode is smaller than the threshold of the number of exclusive access requests, determine that the exclusive mode is within the valid time.

With the network device in this embodiment of the present invention, which control device may temporarily monopolize the network device is determined according to an exclusive control request of a control device; within valid time of an exclusive mode, an access request of an exclusive control device is normally executed, but whether to execute an access request from another control device is determined according to an exclusive condition, or the access request from the another control device is directly rejected or discarded. In this way, reliability and efficiency of a continuous operation and a major operation that are performed by the exclusive control device on the network device are ensured, thereby avoiding possible interference with the major operation on the network device when multiple control devices perform control simultaneously.

In another network device embodiment of the present invention, the network device may further include an updating unit (which is not shown in the figure), configured to: within the valid time of the exclusive mode, if the first access request is an access request sent by the first control device, update a valid period of the exclusive mode. In this way, an operation that is performed by an exclusive control device on the network device may be fully ensured.

FIG 4 is another schematic structural diagram of a network device according to an embodiment of the present invention.

This embodiment is different from the embodiment shown in FIG. 3 in that in this embodiment, the exclusion condition information includes exclusive access interface information and the network device further includes:
an access interface determining unit 305, configured to: determine an interface that is requested to be accessed by the first access request, and notify the executing unit 304 of a determining result.

Accordingly, the executing unit 304 includes an exclusive executing subunit and a condition executing subunit, where:
the exclusive executing subunit is configured to: when a judgment result of the judging unit 303 is that the first access request is an access request sent by the first control device, execute the first access request; and
the condition executing subunit is configured to: when the judgment result of the judging unit 303 is that the first access request is not an access request sent by the first control device and the determining result of the access interface determining unit 305 is that the interface that is requested to be accessed by the first access request is included in the exclusive access interface information, execute the first access request; and otherwise, reject the first access request; or when the judgment result of the judging unit 303 is that the first access request is not an access request sent by the first control device and the determining result of the access interface determining unit 305 is that the interface that is requested to be accessed by the first access request is included in the exclusive access interface information, reject the first access request; and otherwise, execute the first access request.

With the network device in this embodiment of the present invention, reliability and efficiency of a continuous operation and a major operation that are performed by an exclusive control device on the network device may be ensured, thereby avoiding possible interference with the major operation on the network device when multiple control devices perform control simultaneously; and in addition, security of each interface of the network device may further be ensured.

Optionally, in the embodiments shown in FIG. 3 and FIG 4, the exclusion condition information may further include an information set or a specified level of a control device. Accordingly, when determining, according to an exclusive condition, whether to execute the first access request, the executing unit 304 executes the first access request if the first access request is an access request sent by a second control device and the second control device is included in the information set or a level of the second control device is the specified level.

Optionally, in the embodiments shown in FIG 3 and FIG 4, when determining, according to an exclusive condition, whether to execute the first access request, the executing unit 304 may also perform execution according to the following manner: If the first access request is an access request sent by a second control device and a level of the second control device is higher than a level of the first control device, execute the first access request.

Optionally, in the embodiments shown in FIG. 3 and FIG 4, when determining, according to an exclusive condition, whether to execute the first access request, the executing unit 304 may reject an access request from another control device, or postpone executing the access request from the another control device, or discard the access request from the another control device.

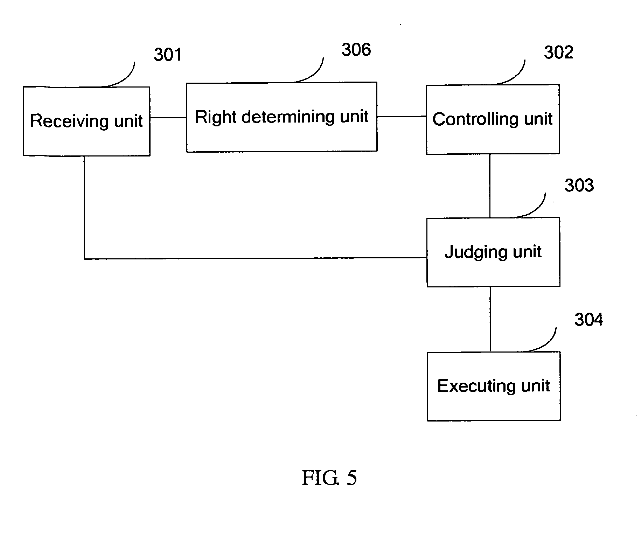

FIG 5 is another schematic structural diagram of a network device according to an embodiment of the present invention.

This embodiment is different from the embodiment shown in FIG. 3 in that in this embodiment, each control device corresponds to one access level. Accordingly, the network device may further include:
a right determining unit 306, configured to: before the controlling unit 302 controls the network device to enter an exclusive mode, determine, according to an access level of the first control device, whether the access level of the first control device has an exclusive right, and if yes, instruct the controlling unit 302 to control the network device to enter the exclusive mode.

It should be noted that the right determining unit 306 may also be applied in the embodiment shown in FIG. 4.

In the foregoing embodiments, the receiving unit 302 may further be configured to receive an exclusive mode cancellation request.

Accordingly, the judging unit 303 is further configured to: within the valid time of the exclusive mode, judge whether the exclusive mode cancellation request is a request sent by the first control device or a request sent by a control device whose level is higher than a level of the first control device. The executing unit 304 is further configured to: after the judging unit 303 judges that the exclusive mode cancellation request is a request sent by the first control device or a request sent by a control device whose level is higher than a level of the first control device, cancel the exclusive mode.

With the network device in this embodiment of the present invention, reliability and efficiency of a continuous operation and a major operation that are performed by an exclusive control device on the network device may be ensured, thereby avoiding possible interference with the major operation on the network device when multiple control devices perform control simultaneously; and in addition, whether an access level of a first control device has an exclusive right is determined, which further ensures security of the network device.

Accordingly, an embodiment of the present invention further provides a network system. The system includes a controlled device and a first control device, where:
the first control device is configured to send an exclusive control request and an access request to the controlled device; and
the controlled device is configured to: receive the exclusive control request from the first control device and enter an exclusive mode; receive a first access request, and within valid time of the exclusive mode, judge whether the first access request is an access request sent by the first control device; if yes, execute the first access request; and otherwise, determine, according to an exclusive condition, whether to execute the first access request, or directly reject or discard the first access request.

In this embodiment of the present invention, the exclusive condition may be a preset exclusive condition that corresponds to the first control device.

In another embodiment of the present invention, the exclusive condition is sent by the first control device to the controlled device, for example, exclusion condition information is carried in the sent exclusive control request, or an exclusive condition may also be set through one or multiple exclusive control commands first. In this way, different exclusive conditions may be set for different control devices, so that differentiated services may be provided for different control devices.

Accordingly, the controlled device is further configured to: receive exclusion condition information and determine the exclusive condition according to the exclusion condition information.

With the network system in this embodiment of the present invention, reliability and efficiency of a continuous operation and a major operation that are performed by an exclusive first control device on a controlled device may be ensured, thereby avoiding possible interference with the major operation on the controlled device when multiple control devices perform control simultaneously.

The embodiments of the present invention are described in detail in the foregoing. Although the present invention is described with reference to specific implementation manners, the description of the embodiments is only intended to help understand the method and device of the present invention. Meanwhile, with respect to the specific implementation manners and application scope, modifications and variations may be made by persons of ordinary skill in the art according to the idea of the present invention. Therefore, content of the specification shall not be construed as a limitation on the present invention.

## Claims

1. A device control method, comprising:
receiving (101) a request for exclusive control from a first control device, and entering an exclusive mode;
receiving (102) a first access request; and
within valid time of the exclusive mode, judging (103) whether the first access request is an access request sent by the first control device; if yes, executing (104) the first access request; and otherwise, determining (105), according to an exclusive condition, whether to execute the first access request;
**characterized in that** a threshold information of the number of access requests is carried in the request for exclusive control, and the method further comprises that:
determining a threshold of the number of access requests from the first control device according to the threshold information of the number of access requests; and
if the recorded number of access requests from the first control device in the exclusive mode is smaller than the threshold of the number of access requests, determining that the exclusive mode is within the valid time.

2. A device control method, comprising:
receiving (101) a request for exclusive control from a first control device, and entering an exclusive mode;
receiving (102) a first access request; and
within valid time of the exclusive mode, judging (103) whether the first access request is an access request sent by the first control device; if yes, executing (104) the first access request; and otherwise, determining (105), according to an exclusive condition, whether to execute the first access request;
**characterized in that** time information and threshold information of the number of access requests are carried in the request for exclusive control, and the method further comprises that:
determining a second time according to the time information ;
determining a threshold of the number of access requests from the first control device according to the threshold information of the number of access requests; and
if current time is within the second time and the recorded number of access requests from the first control device in the exclusive mode is smaller than the threshold of the number of access requests, determining that the exclusive mode is within the valid time.

3. The method according to claim 1 or 2, further comprising:
within the valid time of the exclusive mode, if the first access request is an access request sent by the first control device, updating a valid period of the exclusive mode.

4. The method according to any one of claims 1 to 3, wherein each control device corresponds to one access level; and the method further comprises:
before entering the exclusive mode, determining, according to an access level of the first control device, whether the access level of the first control device has an exclusive right; and if yes, entering the exclusive mode.

5. The method according to any one of claims 1 to 3, further comprising:
receiving an exclusive mode cancellation request; and
if the exclusive mode cancellation request is a request sent by the first control device or a request sent by a control device whose level is higher than a level of the first control device, canceling the exclusive mode.

6. A network device, comprising:
a receiving unit (301), configured to receive a request for exclusive control and an access request;
a controlling unit (302), configured to: after the receiving unit receives a request for exclusive control from a first control device, control the network device to enter an exclusive mode;
a judging unit (303), configured to: within valid time of the exclusive mode, after the receiving unit receives a first access request, judge whether the first access request is an access request sent by the first control device; and
an executing unit (304), configured to: when a judgment result of the judging unit is that the first access request is an access request sent by the first control device, execute the first access request; and otherwise, determine, according to an exclusive condition, whether to execute the first access request;
**characterized in that** the device further comprises a time determine unit configured to: determine a threshold of the number of access requests from the first control device according to threshold information of the number of access requests, wherein the threshold information of the number of access requests is carried in the request for exclusive control; and if the recorded number of access requests from the first control device in the exclusive mode is smaller than the threshold of the number of access requests, determine that the exclusive mode is within the valid time.

7. A network device, comprising:
a receiving unit (301), configured to receive a request for exclusive control and an access request;
a controlling unit (302), configured to: after the receiving unit receives a request for exclusive control from a first control device, control the network device to enter an exclusive mode;
a judging unit (303), configured to: within valid time of the exclusive mode, after the receiving unit receives a first access request, judge whether the first access request is an access request sent by the first control device; and
an executing unit (304), configured to: when a judgment result of the judging unit is that the first access request is an access request sent by the first control device, execute the first access request; and otherwise, determine, according to an exclusive condition, whether to execute the first access request;
**characterized in that** the device further comprises a time determining unit configured to: determine a second time according to time information that is carried in the request for exclusive control; determine a threshold of the number of access requests from the first control device according to threshold information of the number of access requests, wherein the threshold information of the number of access requests is carried in the request for exclusive control; and if current time is within the second time and the recorded number of access requests from the first control device in the exclusive mode is smaller than the threshold of the number of access requests, determine that the exclusive mode is within the valid time.

8. The network device according to claim 6 or 7, further comprising:
an updating unit, configured to: within the valid time of the exclusive mode, if the first access request is an access request sent by the first control device, update a valid period of the exclusive mode.

9. The network device according to any one of claims 6 to 8, further comprising:
a right determining unit (306), configured to: before the controlling unit controls the network device to enter an exclusive mode, determine, according to an access level of the first control device, whether the access level of the first control device has an exclusive right; and if yes, instruct the controlling unit to control the network device to enter the exclusive mode.

10. The network device according to any one of claims 6 to 8, wherein:
the receiving unit is further configured to receive an exclusive mode cancellation request;
the judging unit is further configured to: within the valid time of the exclusive mode, judge whether the exclusive mode cancellation request is a request sent by the first control device or a request sent by a control device whose level is higher than a level of the first control device; and
the executing unit is further configured to: after the judging unit judges that the exclusive mode cancellation request is a request sent by the first control device or a request sent by a control device whose level is higher than a level of the first control device, cancel the exclusive mode.

11. A network system, comprising a controlled device and a first control device, wherein:
the first control device is configured to send a request for exclusive control and an access request to the controlled device; and
the controlled device is configured to: receive the request for exclusive control from the first control device and enter an exclusive mode; receive a first access request, and within valid time of the exclusive mode, judge whether the first access request is an access request sent by the first control device; and if yes, execute the first access request; and otherwise determine, according to an exclusive condition, whether to execute the first access request;
**characterized in that** the controlled device further comprises a time determining unit configured to: determine a threshold of the number of access requests from the first control device according to threshold information of the number of access requests, wherein the threshold information of the number of access requests is carried in the request for exclusive control; and if the recorded number of access requests from the first control device in the exclusive mode is smaller than the threshold of the number of access requests, determine that the exclusive mode is within the valid time.

12. A network system, comprising a controlled device and a first control device, wherein:
the first control device is configured to send a request for exclusive control and an access request to the controlled device; and
the controlled device is configured to: receive the request for exclusive control from the first control device and enter an exclusive mode; receive a first access request, and within valid time of the exclusive mode, judge whether the first access request is an access request sent by the first control device; and if yes, execute the first access request; and otherwise determine, according to an exclusive condition, whether to execute the first access request;
**characterized in that** the controlled device further comprises a time determining unit configured to: determine a second time according to time information that is carried in the request for exclusive control; determine a threshold of the number of access requests from the first control device according to threshold information of the number of access requests, wherein the threshold information of the number of access requests is carried in the request for exclusive control; and if current time is within the second time and the recorded number of access requests from the first control device in the exclusive mode is smaller than the threshold of the number of access requests, determine that the exclusive mode is within the valid time.

## Patentansprüche

1. Verfahren zur Steuerung einer Vorrichtung, umfassend:
Empfangen (101) einer Anforderung zur exklusiven Steuerung von einer ersten Steuerungsvorrichtung und Starten eines exklusiven Modus;
Empfangen (102) einer ersten Zugangsanforderung; und
Bewerten (103), innerhalb eines Gültigkeitszeitraums des exklusiven Modus, ob die erste Zugangsanforderung eine Zugangsanforderung ist, die von der ersten Steuerungsvorrichtung gesendet wurde; falls ja, Ausführen (104) der ersten Zugangsanforderung; und ansonsten Bestimmen (105), entsprechend einer exklusiven Bedingung, ob die erste Zugangsanforderung ausgeführt werden soll;
**gekennzeichnet dadurch, dass** eine Schwellwertinformation der Anzahl an Zugangsanforderungen in der Anforderung zur exklusiven Steuerung enthalten ist, und wobei das Verfahren ferner umfasst:
Bestimmen eines Schwellwerts der Anzahl an Zugangsanforderungen von der ersten Steuerungsvorrichtung gemäß der Schwellwertinformation der Anzahl der Zugangsanforderungen; und
falls die aufgezeichnete Anzahl an Zugangsanforderungen von der ersten Steuerungsvorrichtung im exklusiven Modus kleiner ist als der Schwellwert der Anzahl an Zugangsanforderungen, Bestimmen, dass der exklusive Modus innerhalb des Gültigkeitszeitraums ist.

2. Verfahren zur Steuerung einer Vorrichtung, umfassend:
Empfangen (101) einer Anforderung zur exklusiven Steuerung von einer ersten Steuerungsvorrichtung und Starten eines exklusiven Modus;
Empfangen (102) einer ersten Zugangsanforderung; und
Bewerten (103), innerhalb eines Gültigkeitszeitraums des exklusiven Modus, ob die erste Zugangsanforderung eine Zugangsanforderung ist, die von der ersten Steuerungsvorrichtung gesendet wurde; falls ja, Ausführen (104) der ersten Zugangsanforderung; und ansonsten Bestimmen (105), entsprechend einer exklusiven Bedingung, ob die erste Zugangsanforderung ausgeführt werden soll;
**gekennzeichnet dadurch, dass** Zeitinformationen und Schwellwertinformationen der Anzahl an Zugangsanforderungen in der Anforderung zur exklusiven Steuerung enthalten sind, und wobei das Verfahren ferner umfasst:
Bestimmen eines zweiten Zeitraums entsprechend den Zeitinformationen;
Bestimmen eines Schwellwerts der Anzahl an Zugangsanforderungen von der ersten Steuerungsvorrichtung gemäß den Schwellwertinformation der Anzahl an Zugangsanforderungen; und
falls der aktuelle Zeitraum innerhalb des zweiten Zeitraums liegt und die aufgezeichnete Anzahl an Zugangsanforderungen von der ersten Steuerungsvorrichtung im exklusiven Modus kleiner ist als der Schwellwert der Anzahl an Zugangsanforderungen, Bestimmen, dass der exklusive Modus innerhalb des Gültigkeitszeitraums ist.

3. Verfahren nach Anspruch 1 oder 2, ferner umfassend:
innerhalb des Gültigkeitszeitraums des exklusiven Modus, falls die erste Zugangsanforderung eine Zugangsanforderung ist, die von der ersten Steuerungsvorrichtung gesendet wurde, Aktualisieren einer Gültigkeitsdauer des exklusiven Modus.

4. Verfahren nach einem der Ansprüche 1 bis 3, wobei jede Steuerungsvorrichtung einer Zugangsebene entspricht; und wobei das Verfahren ferner umfasst:
bevor der exklusive Modus gestartet wird, Bestimmen, gemäß einer Zugangsebene der ersten Steuerungsvorrichtung, ob die Zugangsebene der ersten Steuerungsvorrichtung ein exklusives Recht hat; und, falls sie es hat, Starten des exklusiven Modus.

5. Verfahren nach einem der Ansprüche 1 bis 3, ferner umfassend:
Empfangen einer Abbruchanforderung des exklusiven Modus; und
falls die Abbruchanforderung des exklusiven Modus eine Anforderung ist, die von der ersten Steuerungsvorrichtung gesendet wurde, oder eine Anforderung ist, die von einer Steuerungsvorrichtung gesendet wurde, deren Ebene höher ist als eine Ebene der ersten Steuerungsvorrichtung, Abbrechen des exklusiven Modus.

6. Netzwerkvorrichtung, umfassend:
eine Empfangseinheit (301), die dafür ausgelegt ist, eine Anforderung zur exklusiven Steuerung und eine Zugangsanforderung zu empfangen;
eine Steuerungseinheit (302), die dafür ausgelegt ist, nachdem die Empfangseinheit eine Anforderung zur exklusiven Steuerung von einer ersten Steuerungseinheit empfangen hat, die Netzwerkvorrichtung derart zu steuern, dass sie einen exklusiven Modus startet;
eine Bewertungseinheit (303), die dafür ausgelegt ist, innerhalb eines Gültigkeitszeitraums des exklusiven Modus, nachdem die Empfangseinheit eine erste Zugangsanforderung empfangen hat, zu bewerten, ob die erste Zugangsanforderung eine Zugangsanforderung ist, die von der ersten Steuerungsvorrichtung gesendet wurde; und
eine Ausführungseinheit (304), die dafür ausgelegt ist, falls ein Bewertungsergebnis der Bewertungseinheit ist, dass die erste Zugangsanforderung eine Zugangsanforderung ist, die von der ersten Steuerungsvorrichtung gesendet wurde, die erste Zugangsanforderung auszuführen; und ansonsten zu bestimmen, gemäß einer exklusiven Bedingung, ob die erste Zugangsanforderung ausgeführt werden soll;
**gekennzeichnet dadurch, dass** die Vorrichtung ferner eine Zeitbestimmungseinheit aufweist, die dafür ausgelegt ist, einen Schwellwert der Anzahl an Zugangsanforderungen von der ersten Steuerungsvorrichtung gemäß einer Schwellwertinformation der Anzahl an Zugangsanforderungen zu bestimmen, wobei die Schwellwertinformation der Anzahl an Zugangsanforderungen in der Anforderung zur exklusiven Steuerung enthalten ist; und, falls die aufgezeichnete Anzahl an Zugangsanforderungen von der ersten Steuerungsvorrichtung im exklusiven Modus kleiner ist als der Schwellwert der Anzahl an Zugangsanforderungen, zu bestimmen, dass der exklusive Modus innerhalb des Gültigkeitszeitraums ist.

7. Netzwerkvorrichtung, umfassend:
eine Empfangseinheit (301), die dafür ausgelegt ist, eine Anforderung zur exklusiven Steuerung und eine Zugangsanforderung zu empfangen;
eine Steuerungseinheit (302), die dafür ausgelegt ist, nachdem die Empfangseinheit eine Anforderung zur exklusiven Steuerung von einer ersten Steuerungseinheit empfangen hat, die Netzwerkvorrichtung derart zu steuern, dass sie einen exklusiven Modus startet;
eine Bewertungseinheit (303), die dafür ausgelegt ist, innerhalb eines Gültigkeitszeitraums des exklusiven Modus, nachdem die Empfangseinheit eine erste Zugangsanforderung empfangen hat, zu bewerten, ob die erste Zugangsanforderung eine Zugangsanforderung ist, die von der ersten Steuerungsvorrichtung gesendet wurde; und
eine Ausführungseinheit (304), die dafür ausgelegt ist, wenn ein Bewertungsergebnis der Bewertungseinheit ist, dass die erste Zugangsanforderung eine Zugangsanforderung ist, die von der ersten Steuerungsvorrichtung gesendet wurde, die erste Zugangsanforderung auszuführen; und ansonsten, gemäß einer exklusiven Bedingung, zu bestimmen, ob die erste Zugangsanforderung ausgeführt werden soll;
**dadurch gekennzeichnet, dass** die Vorrichtung ferner eine Zeitbestimmungseinheit aufweist, die dafür ausgelegt ist: einen zweiten Zeitraum gemäß Zeitinformationen zu bestimmen, die in der Anforderung zur exklusiven Steuerung enthalten sind; einen Schwellwert der Anzahl an Zugangsanforderungen von der ersten Steuerungsvorrichtung gemäß einer Schwellwertinformation der Anzahl an Zugangsanforderungen zu bestimmen, wobei die Schwellwertinformation der Anzahl an Zugangsanforderungen in der Anforderung zur exklusiven Steuerung enthalten ist;
und, falls der aktuelle Zeitraum innerhalb des zweiten Zeitraums ist und die aufgezeichnete Anzahl an Zugangsanforderungen von der ersten Steuerungsvorrichtung im exklusiven Modus kleiner ist als der Schwellwert der Anzahl an Zugangsanforderungen, zu bestimmen, dass der exklusive Modus innerhalb des Gültigkeitszeitraums ist.

8. Netzwerkvorrichtung nach Anspruch 6 oder 7, ferner umfassend:
eine Aktualisierungseinheit, die dafür ausgelegt ist, innerhalb des Gültigkeitszeitraums des exklusiven Modus, falls die erste Zugangsanforderung eine Zugangsanforderung ist, die von der ersten Steuerungsvorrichtung gesendet wurde, eine Gültigkeitsdauer des exklusiven Modus zu aktualisieren.

9. Netzwerkvorrichtung nach einem der Ansprüche 6 bis 8, ferner umfassend:
eine Rechte-Bestimmungseinheit (306), die dafür ausgelegt ist, bevor die Steuerungseinheit die Netzwerkvorrichtung derart steuert, dass diese einen exklusiven Modus startet, zu bestimmen, gemäß einer Zugangsebene der ersten Steuerungsvorrichtung, ob die Zugangsebene der ersten Steuerungsvorrichtung ein exklusives Recht hat; und, falls ja, die Steuerungseinheit anzuweisen, die Netzwerkvorrichtung derart zu steuern, dass diese den exklusiven Modus startet.

10. Netzwerkvorrichtung nach einem der Ansprüche 6 bis 8, wobei:
die Empfangseinheit ferner dafür ausgelegt ist, eine Abbruchanforderung eines exklusiven Modus zu empfangen;
die Bewertungseinheit ferner ausgelegt ist, innerhalb des Gültigkeitszeitraums des exklusiven Modus zu bewerten, ob die Abbruchanforderung des exklusiven Modus eine Anforderung ist, die von der ersten Steuerungsvorrichtung gesendet wurde, oder eine Anforderung ist, die von einer Steuerungseinheit gesendet wurde, deren Ebene höher ist als eine Ebene der ersten Steuerungsvorrichtung; und
die Ausführungseinheit ferner dafür ausgelegt ist, nachdem die Bewertungseinheit bewertet hat, dass die Abbruchanforderung des exklusiven Modus eine Anforderung ist, die von der ersten Steuerungsvorrichtung gesendet wurde, oder eine Anforderung ist, die von einer Steuerungsvorrichtung gesendet wurde, deren Ebene höher ist als eine Ebene der ersten Steuerungsvorrichtung, den exklusiven Modus zu beenden.

11. Netzwerksystem, umfassend eine gesteuerte Vorrichtung und eine erste Steuerungsvorrichtung, wobei:
die erste Steuerungsvorrichtung dafür ausgelegt ist, eine Anforderung zur exklusiven Steuerung und eine Zugangsanforderung an die gesteuerte Vorrichtung zu senden; und
die gesteuerte Vorrichtung dafür ausgelegt ist, die Anforderung zur exklusiven Steuerung von der ersten Steuerungsvorrichtung zu empfangen und einen exklusiven Modus zu starten; eine erste Zugangsanforderung zu empfangen, und innerhalb des Gültigkeitszeitraums des exklusiven Modus zu bewerten, ob die erste Zugangsanforderung eine Zugangsanforderung ist, die von der ersten Steuerungsvorrichtung gesendet wurde; und, falls ja, die erste Zugangsanforderung auszuführen; und ansonsten, gemäß einer exklusiven Bedingung, zu bestimmen, ob die erste Zugangsanforderung ausgeführt werden soll;
**gekennzeichnet dadurch, dass** die gesteuerte Vorrichtung ferner eine Zeitbestimmungseinheit aufweist, die dafür ausgelegt ist, einen Schwellwert der Anzahl an Zugangsanforderungen von der ersten Steuerungsvorrichtung gemäß einer Schwellwertinformation der Anzahl an Zugangsanforderungen zu bestimmen, wobei die Schwellwertinformation der Anzahl an Zugangsanforderungen in der Anforderung zur exklusiven Steuerung enthalten ist;
und, falls die aufgezeichnete Anzahl an Zugangsanforderungen von der ersten Steuerungsvorrichtung im exklusiven Modus kleiner ist als der Schwellwert der Anzahl an Zugangsanforderungen, zu bestimmen, dass der exklusive Modus innerhalb des Gültigkeitszeitraums ist.

12. Netzwerksystem, umfassend eine gesteuerte Vorrichtung und eine erste Steuerungsvorrichtung, wobei:
die ersten Steuerungsvorrichtung dafür ausgelegt ist, eine Anforderung zur exklusiven Steuerung und eine Zugangsanforderung an die gesteuerte Vorrichtung zu senden; und
die gesteuerte Vorrichtung dafür ausgelegt ist, die Anforderung zur exklusiven Steuerung von der ersten Steuerungsvorrichtung zu empfangen und einen exklusiven Modus zu starten; eine erste Zugangsanforderung zu empfangen und innerhalb des Gültigkeitszeitraums des exklusiven Modus zu bewerten, ob die erste Zugangsanforderung eine Zugangsanforderung ist, die von der ersten Steuerungsvorrichtung gesendet wurde; und, falls ja, die erste Zugangsanforderung auszuführen; und ansonsten, gemäß einer exklusiven Bedingung, zu bestimmen, ob die erste Zugangsanforderung ausgeführt werden soll;
**gekennzeichnet dadurch, dass** die gesteuerte Vorrichtung ferner eine Zeitbestimmungseinheit umfasst, die dafür ausgelegt ist, einen zweiten Zeitraum gemäß Zeitinformationen zu bestimmen, die in der Anforderung zur exklusiven Steuerung enthalten sind; einen Schwellwert der Anzahl an Zugangsanforderungen von der ersten Steuerungsvorrichtung gemäß einer Schwellwertinformation der Anzahl an Zugangsanforderungen zu bestimmen, wobei die Schwellwertinformation der Anzahl an Zugangsanforderungen in der Anforderung zur exklusiven Steuerung enthalten ist; und, falls der aktuelle Zeitraum innerhalb des zweiten Zeitraums liegt und die aufgezeichnete Anzahl an Zugangsanforderungen von der ersten Steuerungsvorrichtung im exklusiven Modus kleiner ist als der Schwellwert der Anzahl an Zugangsanforderungen, zu bestimmen, dass der exklusive Modus innerhalb des Gültigkeitszeitraums ist.

## Revendications

1. Procédé de commande de dispositif, comprenant les étapes suivantes :
recevoir (101) une requête de commande exclusive à partir d'un premier dispositif de commande, et entrer dans un mode exclusif ;
recevoir (102) une première requête d'accès ; et
dans un temps valide du mode exclusif, juger (103) si la première requête d'accès est une requête d'accès envoyée par le premier dispositif de commande ; si tel est le cas, exécuter (104) la première requête d'accès ; et dans le cas contraire, déterminer (105), selon une condition exclusive, s'il faut exécuter la première requête d'accès ;
**caractérisé en ce que** des informations de seuil du nombre de requêtes d'accès sont contenues dans la requête de commande exclusive, et **en ce que** le procédé comprend en outre les étapes suivantes :
déterminer un seuil du nombre de requêtes d'accès émises à partir du premier dispositif de commande selon les informations de seuil du nombre de requêtes d'accès ; et
si le nombre enregistré de requêtes d'accès émises à partir du premier dispositif de commande dans le mode exclusif est inférieur au seuil du nombre de requêtes d'accès, déterminer que le mode exclusif est compris dans le temps valide.

2. Procédé de commande de dispositif, comprenant les étapes suivantes :
recevoir (101) une requête de commande exclusive à partir d'un premier dispositif de commande, et entrer dans un mode exclusif ;
recevoir (102) une première requête d'accès ; et
dans un temps valide du mode exclusif, juger (103) si la première requête d'accès est une requête d'accès envoyée par le premier dispositif de commande ; si tel est le cas, exécuter (104) la première requête d'accès ; et dans le cas contraire, déterminer (105), selon une condition exclusive, s'il faut exécuter la première requête d'accès ;
**caractérisé en ce que** des informations de temps et des informations de seuil du nombre de requêtes d'accès sont contenues dans la requête de commande exclusive,
et **en ce que** le procédé comprend en outre les étapes suivantes :
déterminer un deuxième temps selon les informations de temps ;
déterminer un seuil du nombre de requêtes d'accès émises à partir du premier dispositif de commande selon les informations de seuil du nombre de requêtes d'accès ; et
si un temps courant est compris dans le deuxième temps et que le nombre enregistré de requêtes d'accès émises à partir du premier dispositif de commande dans le mode exclusif est inférieur au seuil du nombre de requêtes d'accès, déterminer que le mode exclusif est compris dans le temps valide.

3. Procédé selon la revendication 1 ou 2, comprenant en outre l'étape suivante :
dans le temps valide du mode exclusif, si la première requête d'accès est une requête d'accès envoyée par le premier dispositif de commande, mettre à jour une période valide du mode exclusif.

4. Procédé selon l'une quelconque des revendications 1 à 3, dans lequel chaque dispositif de commande correspond à un niveau d'accès ; le procédé comprenant en outre les étapes suivantes :
avant d'entrer dans le mode exclusif, déterminer, selon un niveau d'accès du premier dispositif de commande, si le niveau d'accès du premier dispositif de commande a un droit exclusif ; et si tel est le cas, entrer dans le mode exclusif.

5. Procédé selon l'une quelconque des revendications 1 à 3, comprenant en outre les étapes suivantes :
recevoir une requête d'annulation de mode exclusif ; et
si la requête d'annulation de mode exclusif est une requête envoyée par le premier dispositif de commande ou une requête envoyée par un dispositif de commande dont le niveau est supérieur à un niveau du premier dispositif de commande, annuler le mode exclusif.

6. Dispositif réseau, comprenant :
une unité de réception (301), configurée pour recevoir une requête de commande exclusive et une requête d'accès ;
une unité de contrôle (302), configurée pour commander, après que l'unité de réception a reçu une requête de commande exclusive à partir d'un premier dispositif de commande, au dispositif réseau d'entrer dans un mode exclusif ;
une unité de jugement (303), configurée pour juger, dans un temps valide du mode exclusif, après que l'unité de réception a reçu une première requête d'accès, si la première requête d'accès est une requête d'accès envoyée par le premier dispositif de commande ; et
une unité d'exécution (304), configurée pour exécuter, lorsqu'un résultat de jugement de l'unité de jugement est que la première requête d'accès est une requête d'accès envoyée par le premier dispositif de commande, la première requête d'accès ; et dans le cas contraire, déterminer, selon une condition exclusive, s'il faut exécuter la première requête d'accès ;
**caractérisé en ce que** le dispositif comprend en outre une unité de détermination de temps configurée pour déterminer un seuil du nombre de requêtes d'accès émises à partir du premier dispositif de commande selon des informations de seuil du nombre de requêtes d'accès, les informations de seuil du nombre de requêtes d'accès étant contenues dans la requête de commande exclusive ; et si le nombre enregistré de requêtes d'accès émises à partir du premier dispositif de commande dans le mode exclusif est inférieur au seuil du nombre de requêtes d'accès, déterminer que le mode exclusif est compris dans le temps valide.

7. Dispositif réseau, comprenant :
une unité de réception (301), configurée pour recevoir une requête de commande exclusive et une requête d'accès ;
une unité de contrôle (302), configurée pour commander, après que l'unité de réception a reçu une requête de commande exclusive à partir d'un premier dispositif de commande, au dispositif réseau d'entrer dans un mode exclusif ;
une unité de jugement (303), configurée pour juger, dans un temps valide du mode exclusif, après que l'unité de réception a reçu une première requête d'accès, si la première requête d'accès est une requête d'accès envoyée par le premier dispositif de commande ; et
une unité d'exécution (304), configurée pour exécuter, lorsqu'un résultat de jugement de l'unité de jugement est que la première requête d'accès est une requête d'accès envoyée par le premier dispositif de commande, la première requête d'accès ; et dans le cas contraire, déterminer, selon une condition exclusive, s'il faut exécuter la première requête d'accès ;
**caractérisé en ce que** le dispositif comprend en outre une unité de détermination de temps configurée pour déterminer un deuxième temps selon des informations de temps qui sont contenues dans la requête de commande exclusive ; déterminer un seuil du nombre de requêtes d'accès émises à partir du premier dispositif de commande selon des informations de seuil du nombre de requêtes d'accès, les informations de seuil du nombre de requêtes d'accès étant contenues dans la requête de commande exclusive ; et si un temps courant est compris dans le deuxième temps et que le nombre enregistré de requêtes d'accès émises à partir du premier dispositif de commande dans le mode exclusif est inférieur au seuil du nombre de requêtes d'accès, déterminer que le mode exclusif est compris dans le temps valide.

8. Dispositif réseau selon la revendication 6 ou 7, comprenant en outre :
une unité de mise à jour, configurée pour mettre à jour, dans le temps valide du mode exclusif, si la première requête d'accès est une requête d'accès envoyée par le premier dispositif de commande, une période valide du mode exclusif.

9. Dispositif réseau selon l'une quelconque des revendications 6 à 8, comprenant en outre :
une unité de détermination de droit (306), configurée pour déterminer, avant que l'unité de contrôle ne commande au dispositif réseau d'entrer dans un mode exclusif,
selon un niveau d'accès du premier dispositif de commande, si le niveau d'accès du premier dispositif de commande a un droit exclusif ; et si tel est le cas, ordonner à l'unité de contrôle de commander au dispositif réseau d'entrer dans le mode exclusif.

10. Dispositif réseau selon l'une quelconque des revendications 6 à 8, dans lequel :
l'unité de réception est en outre configurée pour recevoir une requête d'annulation de mode exclusif ;
l'unité de jugement est en outre configurée pour juger, dans le temps valide du mode exclusif, si la requête d'annulation de mode exclusif est une requête envoyée par le premier dispositif de commande ou une requête envoyée par un dispositif de commande dont le niveau est supérieur à un niveau du premier dispositif de commande ; et
l'unité d'exécution est en outre configurée pour annuler, après que l'unité de jugement a jugé que la requête d'annulation de mode exclusif est une requête envoyée par le premier dispositif de commande ou une requête envoyée par un dispositif de commande dont le niveau est supérieur à un niveau du premier dispositif de commande, le mode exclusif.

11. Système de réseau, comprenant un dispositif commandé et un premier dispositif de commande, dans lequel :
le premier dispositif de commande est configuré pour envoyer une requête de commande exclusive et une requête d'accès au dispositif commandé ; et
le dispositif commandé est configuré pour recevoir la requête de commande exclusive à partir du premier dispositif de commande et entrer dans un mode exclusif ; recevoir une première requête d'accès, et dans un temps valide du mode exclusif, juger si la première requête d'accès est une requête d'accès envoyée par le premier dispositif de commande ; et si tel est le cas, exécuter la première requête d'accès ; et dans le cas contraire, déterminer, selon une condition exclusive, s'il faut exécuter la première requête d'accès ;
**caractérisé en ce que** le dispositif commandé comprend en outre une unité de détermination de temps configurée pour déterminer un seuil du nombre de requêtes d'accès émises à partir du premier dispositif de commande selon des informations de seuil du nombre de requêtes d'accès, les informations de seuil du nombre de requêtes d'accès étant contenues dans la requête de commande exclusive ; et si le nombre enregistré de requêtes d'accès émises à partir du premier dispositif de commande dans le mode exclusif est inférieur au seuil du nombre de requêtes d'accès,
déterminer que le mode exclusif est compris dans le temps valide.

12. Système de réseau, comprenant un dispositif commandé et un premier dispositif de commande, dans lequel :
le premier dispositif de commande est configuré pour envoyer une requête de commande exclusive et une requête d'accès au dispositif commandé ; et
le dispositif commandé est configuré pour recevoir la requête de commande exclusive à partir du premier dispositif de commande et entrer dans un mode exclusif ; recevoir une première requête d'accès, et dans un temps valide du mode exclusif, juger si la première requête d'accès est une requête d'accès envoyée par le premier dispositif de commande ; et si tel est le cas, exécuter la première requête d'accès ; et dans le cas contraire, déterminer, selon une condition exclusive, s'il faut exécuter la première requête d'accès ;
**caractérisé en ce que** le dispositif commandé comprend en outre une unité de détermination de temps configurée pour déterminer un deuxième temps selon des informations de temps qui sont contenues dans la requête de commande exclusive ;
déterminer un seuil du nombre de requêtes d'accès émises à partir du premier dispositif de commande selon des informations de seuil du nombre de requêtes d'accès, les informations de seuil du nombre de requêtes d'accès étant contenues dans la requête de commande exclusive ; et si un temps courant est compris dans le deuxième temps et que le nombre enregistré de requêtes d'accès émises à partir du premier dispositif de commande dans le mode exclusif est inférieur au seuil du nombre de requêtes d'accès, déterminer que le mode exclusif est compris dans le temps valide.
